# EUROPEAN PATENT SPECIFICATION

(11) **EP 4 203 416 B1**
(45) Date of publication and mention of the grant of the patent: **20.03.2024**
(21) Application number: 21216470.1
(22) Date of filing: 21.12.2021
(51) Int. Cl.: H04L 41/5051, H04L 41/5054, H04L 41/40

(54) **METHOD AND DEVICE FOR CONTROLLING DEPLOYMENT OF NETWORK FUNCTIONS OF A COMMUNICATION SYSTEM WITH PROGRAMMABLE METASURFACES**
VERFAHREN UND VORRICHTUNG ZUR STEUERUNG DES EINSATZES VON NETZWERKFUNKTIONEN EINES KOMMUNIKATIONSSYSTEMS MIT PROGRAMMIERBAREN META-OBERFLÄCHEN
PROCÉDÉ ET DISPOSITIF POUR COMMANDER LE DÉPLOIEMENT DE FONCTIONS DE RÉSEAU D'UN SYSTÈME DE COMMUNICATION AVEC DES MÉTASURFACES PROGRAMMABLES

(43) Date of publication of application: 28.06.2023
(73) Proprietor: NTT DOCOMO, INC., Chiyoda-ku Tokyo 100-6150 (JP)
(72) Inventor: KATSALIS, Kostas, 80687 Munich (DE); TRIAY MARQUES, Joan, 80687 Munich (DE); KUNO, Yuya, Tokyo 100-6150 (JP)
(74) Representative: Viering, Jentschura & Partner mbB Patent- und Rechtsanwälte

(56) References cited:
- EP-A1- 3 439 107
- STRINATI EMILIO CALVANESE ET AL: "Reconfigurable, Intelligent, and Sustainable Wireless Environments for 6G Smart Connectivity", IEEE COMMUNICATIONS MAGAZINE, IEEE SERVICE CENTER, PISCATAWAY, US, vol. 59, no. 10, 26 November 2021 (2021-11-26), pages 99-105, XP011889894, ISSN: 0163-6804, DOI: 10.1109/MCOM.001.2100070 [retrieved on 2021-11-26]
- ZTE CORPORATION MENGNAN JIAN: "Use cases and deployment scenarios for RIS", ETSI DRAFT; RIS-001V001, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG - RIS 30 November 2021 (2021-11-30), pages 1-5, XP014428159, Retrieved from the Internet: URL:ftp://docbox.etsi.org/ISG/RIS/70-Draft /001/RIS-001v001.docx [retrieved on 2021-11-30]

## Description

The present disclosure relates to methods and devices for controlling the deployment of network functions of a communication system including programmable metasurfaces, e.g. during system instantiation and during network functions lifecycle management.

Communication systems, in particular mobile communication systems, typically provide coverage for a certain geographic region. For this, communication system resources (including actual network forwarding resources as well as data processing resources) are needed to provide network functions (NF). For example, in the case of the disaggregated Radio Access Network (RAN), resources are needed for implementing centralized units, distributed units and radio units.

Efficient approaches for deployment with regard to communication system resource usage are desirable.

The publication "Reconfigurable, Intelligent and Sustainable Wireless Environments for 6G Smart Connectivity" by Emilio Calvanese Strinati et al., IEEE Communication Magazine, IEEE Service Center, Picataway, US, vol. 59, no. 10, November 26, 2021, pages 99-105, describes the usage of Reconfigurable Intelligent Surfaces (RIS) in a communication system, which in particular includes joint use of a RIS area and allocation of the RIS resources through spatial tuning according to the policies set by the RIS owner.

The publication EP 3 439 107 A1 describes a meta-surface system comprising in particular adjusting the electromagnetic behaviour of controllable elements such that the surface interacts with the impinging electromagnetic wave in a predefined manner. It may be applied in a mobile device- to-base station communication scenario.

The publication "Use cases and deployment scenarios for RIS" by ZTE Corporation (Mengnan Jian), ETSI draft RIS-001v001, vol. ISG - RIS, November 30, 2021, pages 1 - 5, includes proposals and observations including the applications of RIS, such as in a service area of a base station.

According to one embodiment, a deployment controlling component of a communication system and a method for controlling deployment of a communication system according to the independent claims are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system, in this example a 5G (fifth generation) communication system, e.g. in accordance with 3GPP (Third Generation Partnership Project) and relevant management and orchestration systems.
- Figure 2: shows a physical area (e.g. a building floor) in which communication devices are arranged at three sub-area positions.
- Figure 3: shows a deployment control arrangement according to an embodiment.
- Figure 4: shows a deployment control arrangement with multiple programmable metasurface (PMS) managers in communication with an orchestrator.
- Figure 5: illustrates communication system components in the case of disaggregated RAN for providing a network service to a mobile terminal or user equipment (UE).
- Figure 6: shows a flow diagram illustrating PMS-based validation according to an embodiment.
- Figure 7: shows a flow diagram for PMS resource reservation with on-demand orchestration driven by OSSBSS (Operation Support Systems / Business Support Systems).
- Figure 8: shows a flow diagram for PMS resource reservation with dynamic and/or automatic network driven orchestration.
- Figure 9: shows a flow diagram for PMS resource reservation with on-demand onboarding and instantiation based on a PMS PNFD (Physical Network Function Descriptor).
- Figure 10: gives an example for the modelling of PMS information.
- Figure 11: gives an example for the modelling of orchestrator functionality and exposed interfaces.
- Figure 12: shows an architecture where an orchestrator 1201 communicates with a PMS manager 1202 via a smart building (or city) management system 1203.
- Figure 13: shows an architecture for ETSI (European Telecommunications Standards Institute) NFV-MANO (Network Functions Virtualization - Management and Orchestration) aware orchestration including PMSs.
- Figure 14: shows an architecture for O-RAN (Open Radio Access Network) based orchestration including PMSs.
- Figure 15: shows an architecture for an industrial network including PMSs.
- Figure 16: shows a deployment controlling component of a communication system according to an embodiment.
- Figure 17: shows a flow diagram illustrating a method for controlling deployment of a communication system according to an embodiment.

The following detailed description refers to the accompanying drawings that show, by way of illustration, specific details and aspects of this disclosure in which the invention may be practiced.

The communication system resources may for example include compute, network, storage, radio transmission, radio reception and signal processing devices.

The network functions may for example include centralized units, distributed units and/or radio units.

The network functions may for example include base station components.

It should be noted that one or more of the features of any of the examples above may be combined with any one of the other examples. In particular, the examples described in context of the device are analogously valid for the method.

In the following, various examples will be described in more detail.

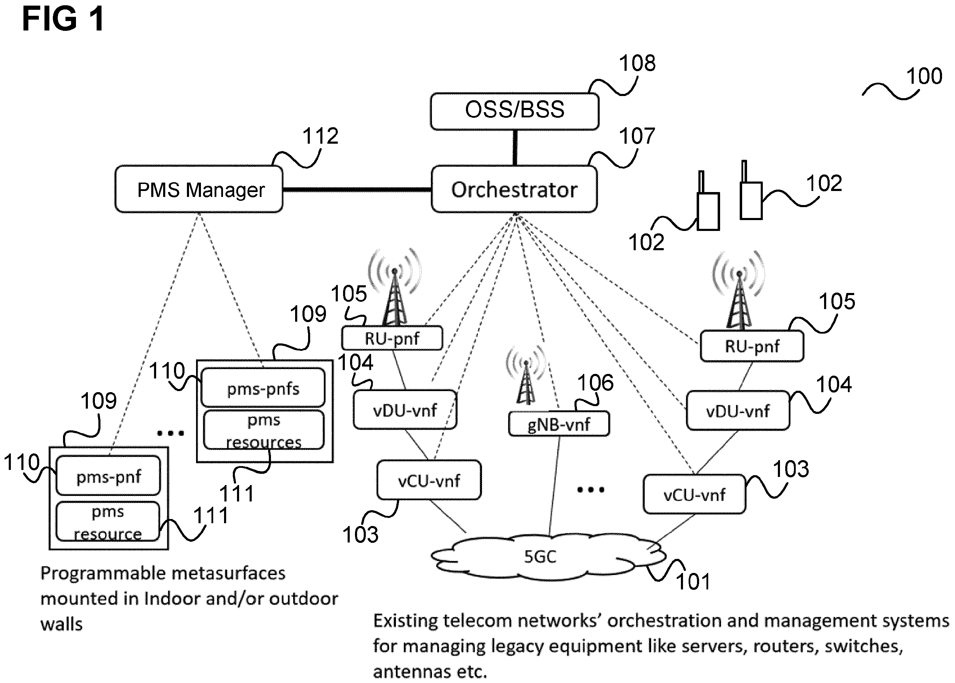

Figure 1 shows a communication system 100, in this example a 5G (fifth generation) communication system, e.g. in accordance with 3GPP (Third Generation Partnership Project). The communication system 100 includes a 5G Core network (5GC) 101. The 5GC 101 is coupled to a radio access network (RAN) which provides radio access for mobile terminals 102. The radio access network is provided by Virtualized Network Functions (VNFs) as well as Physical Network Functions (PNFs), like virtualized Central Units (CU) 103, virtualized Distributed Units (DU) 104, (physical) Radio Units (RU) 105 for the case of disaggregated RAN and a gNB 106 in the non-disaggregated case. The architecture could also be applied in the case of 5G ng-eNB and also 4G eNB connected to 4G Packet core network.

The deployment and management of the Virtualized Network Functions (VNF) as well as Physical Network Functions (PNF) is controlled by an orchestration network component (also referred to orchestrator) 107. The orchestrator 107 operates in accordance with instructions and policies provided by Operation Support Systems (OSS) and Business Support System (BSS) 108.

According to various embodiments, the communication system 100 in particular includes Programmable Metasurfaces (PMS) 109. Each PMS 109 includes a PMS PNF 110 (i.e. the PMS controller functions) and an associated PMS resource 111 (i.e. the actual metasurface mounted on an indoor and/or outdoor wall).

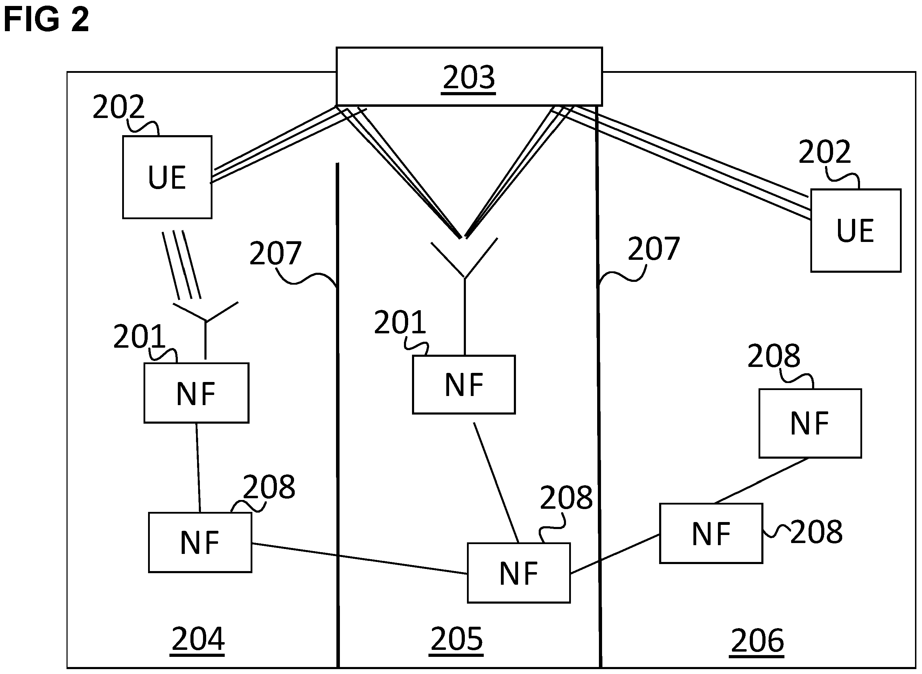

A programmable metasurface typically includes an arrangement (e.g. matrix) of switchable elements which provides the ability to manipulate radio signals like steering radio beams in a specific direction or completely absorb radio waves. This enables in particular mitigating undesired path loss effects in real-world wireless communication use cases as illustrated for example in figure 2.

Figure 2 shows a physical area (e.g. a building floor) with four communication devices 201, 202. Each of two first communication devices 201 reassembles the properties of a 5G base-station with radio capabilities hosting the necessary radio NF, while second communication devices 202 are UEs. Left UE 202 is located in sub-area 204, left radio NF is also in sub-area 204. Right UE 202 is in sub-area 206, while another radio NF 201 is located in sub-area 205. The sub-areas (e.g. rooms) are separated by walls 207 (completely or partially). The radio NFs (of the first communication devices) are connected to the rest of the RAN and Core NFs (exposed as VNFs or PNFs) 208 which are deployed according to the network operator policies.

At one wall in sub-area 205 a programmable metasurface (PMS) 203 is provided.

By means of the programmable metasurface 203, the communication devices 201, 202 may communicate efficiently (with acceptable path loss) in spite of the walls 207.

Thus, the necessity of deploying a radio NF (base station) 201 on the left sub-area 204 to cover the left UE 202 may be avoided. Besides the deployment of radio NFs 201, the deployment of

RAN and Core NFs 208 can be controlled according to the presence and the capabilities of PMS 203, for example to enable and optimize ultra-low latency services.

Programmable metasurfaces 203 further enable optimizing MIMO (multiple input multiple output) capacity using tunable metasurfaces as well as improving wave propagation to achieve constructive superposition at the user devices (mobile terminals, user equipments (UEs)), optimizing their power-delay profile (PDP) and avoiding the negative effects of multi-path fading.

According to various embodiments, approaches are provided to enable the functionality in a communication system 100 (in particular in the orchestrator 107 and the OSSBSS 108) to optimize the deployment and operation of the Network Services (NSs) considering a PMS operational environment, i.e. an environment including programmable metasurfaces. The approaches described in the following enable handling metasurfaces as a programmable infrastructure resource (i.e. a communication system resource) and jointly orchestrating it as part of the integrated mobile network, i.e. radio access and core network. According to various embodiments, the communication system 100 includes an integrated orchestration plane which enables the usage of traditional (i.e. non-metasurface) network elements and metasurface deployments. In particular, interfaces between metasurface control and management elements and the mobile network orchestrator 107 and the OSS/BSS 108 are defined. From the OSS/BSS point of view, PMS vendor agnostic orchestration is provided by the orchestrator. Management of programmable metasurfaces 109 according to various embodiments enables PMS-awareness, enables PMS-aware policies to be defined by the network operator and perform PMS-aware validation of Network operations .

The programmable metasurfaces 109 are managed by a managing component 112 (also referred to as (PMS) Manager in the following).

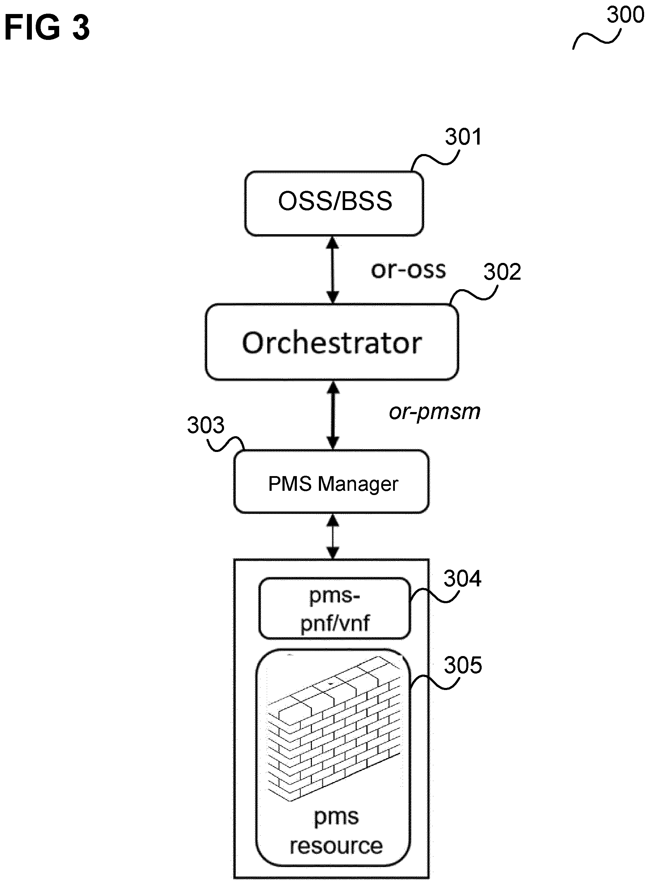

According to various embodiments, to enable telecommunication network deployment and operation optimization of integrated Network Services (NSs) as a composition of Virtualized Network Functions (VNF) and Physical Network Functions (PNF) and nested Network Services, considering PMSs (managed by the telecommunication network), interfaces and functions are provided as described in the following with reference to figure 3.

Figure 3 shows a deployment control arrangement 300 including OSSBSS 301 (corresponding to OSSBSS 108), an orchestrator 302 (corresponding to orchestrator 107) and a PMS manager 303 (corresponding to manager 112) which acts in particular as PMS manager to manage at least one programmable metasurface PNF/VNF 304 associated with a programmable metasurface resource 305 (i.e. an actual programmable metasurface).

The OSSBSS 301 and the orchestrator 302 are connected via one or more interfaces over the or-oss reference point. In the present specification, a reference point is regarded as the conceptual point at the conjunction of two non-overlapping functions that can be used to identify the information passing between these functions. According to various embodiments, existing or-oss reference point interfaces are extended to enable PMS-aware communication between the orchestrator 302 and the OSSBSS 301 (e.g., extend existing interfaces on a reference point like Os-Ma-nfvo when considering an ETSI NFV based NFV-MANO solution) for signalling and orchestration to establish end-to-end Network Services, considering the PMS manager 303 as part of the orchestration action. While the (PMS) Manager 303 can be technology specific, or-oss communication is technology agnostic. Signalling via the or-oss reference point interfaces is related to issues like registration of PMS-Manager/MSs, onboarding of PMSs as resources and PMS notification management. In one implementation aspect or-oss information exchanges can be realized as a single interface providing the intended functionality or as a set of interfaces.

In the OSSBSS 301, functionality to handle a PMS as a programmable telecom infrastructure resource (i.e. communication system resource) is provided and functionalities and interactions between the OSSBSS and orchestrator for that purpose are provided. Further, NS definitions considering PMS PNFs as part of the NS descriptors and as an additional control variable for decision making are provided in the OSSBSS 301.

The orchestrator 302 may implement an orchestration framework supporting the following extended functionality :
- Validation Function: used to validate PMS-aware NS descriptors and conform against PMS policies.
- Resource Allocation Function : Optimization of resources allocation and VNF/PNF deployment based on PMS information (i.e. information about presence and capabilities of one or more programmable metasurfaces).

The orchestration framework could be based on e.g., NFVO (Network Functions Virtualization Orchestrator) when considering ETSI NFV's NFV-MANO framework, or/and SMO (Service Management & Orchestrator) when considering an O-RAN framework.

Similarly to the Validation Function and Resource Allocation and Network Deployment Function other functions inside the orchestrator can be extended with PMS related input to assist decision making.

Supporting functionalities to realize these two functions include for example:
∘ Additional functionality to handle a PMS as a programmable infrastructure resource (i.e., communication system resource).
∘ Extended resource catalogues and mechanisms (e.g. update resource catalogues, resource registration mechanisms, resource descriptors etc.) in the orchestrator 302.
∘ Hiding PMS manager 303 complexity from 301 OSS/BSS through the orchestrator 302.
∘ Orchestration procedures and interactions between OSSBSS 301 and orchestrator 302.
∘ NS requirements translation to resource reservation requests.
∘ Handle PMS resource information models and PMS PNFs.

Between orchestrator 302 and PMS manager 303, an or-pmsm (pmsm: programmable metasurface manager) reference point is established to identify the communication between these two entities which may support multi-PMS manager technology communication and signalling related to issues like PMS capabilities exposure, PMS notifications and PMS monitoring.

It should be noted that although the PMS manager 303 could expose directly services to the OSSBSS 301, various embodiments provide instead an integrated orchestration mechanism supporting the end-to-end NS establishment and jointly performing resource management. Therein, each metasurface is considered as a programmable infrastructure element that can be controlled and monitored by the integrated orchestration mechanism (i.e. by the orchestrator 302) as a physical network resource, exposing controllable PMS PNFs. This allows optimization of end-to-end operations rather than considering the wireless environment as an uncontrollable resource with stochastic behaviour.

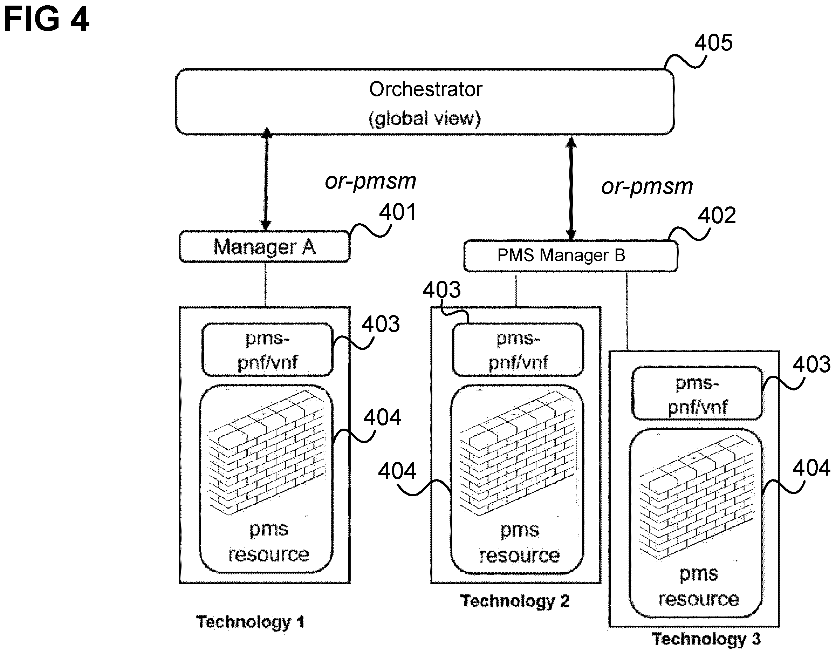

Figure 4 shows a deployment control arrangement with multiple PMS managers 401, 402 in communication via or-pmsm interfaces with an orchestrator 405.

In the present example, a multi-PMS technology environment is considered (including programmable surfaces according to various PMS technologies such as nano-MIMO arrays, passive elements, programmable atoms etc.). Each PMS manager 401, 402 is an entity responsible for the management and control of PMS PNFs 403 and the corresponding PMS resources 404.

A single PMS manager 401, 402 can be technology specific or able to handle PMSs of multiple technologies. In the present example, the first PMS manager 401 handles a PMS of a first technology and the second PMS manager 402 handles a PMS of a second technology and a PMS of a third technology.

According to various embodiments, orchestration operations are irrelevant to the PMS manager deployment model and PMS manager internal optimizations (which may be PMS specific). A PMS manager 401, 402 can expose metasurface control plane (CP) and management plane information in the Northbound (i.e. to orchestrator 405). This can be realized in a form of a IoT (Internet of Things) gateway systems realizing the respective PMS manager 401, 402.

Each PMS manager 401, 402 can be distributed or fully centralized and expose the respective PMS PNF(s) 403 to the orchestrator. The PMS manager can be physically co-located with the PMS PNF and PMS resource , can also be realized as a VNF and can integrate the role of an IoT (Internet of Things) gateway. The reference point or-manager enables communication between the orchestrator and PMS manager.

It should be noted that from a management and orchestration perspective (similarly to ETSI NFV's NFV-MANO (Management and Orchestration)), the actual configuration that is applied to a PMS PNF may be irrelevant. For example, an application residing either in an PMS-aware OSSBSS or an external management systems is able to produce the exact matching air-routes and request to deploy them by sending corresponding EM (Element Manager) manipulation commands to the respective PMS PNF through PMS manager 401, 402. In this case the orchestrator is not aware of the actual configuration that is applied nor it performs relevant PMS configuration optimization.

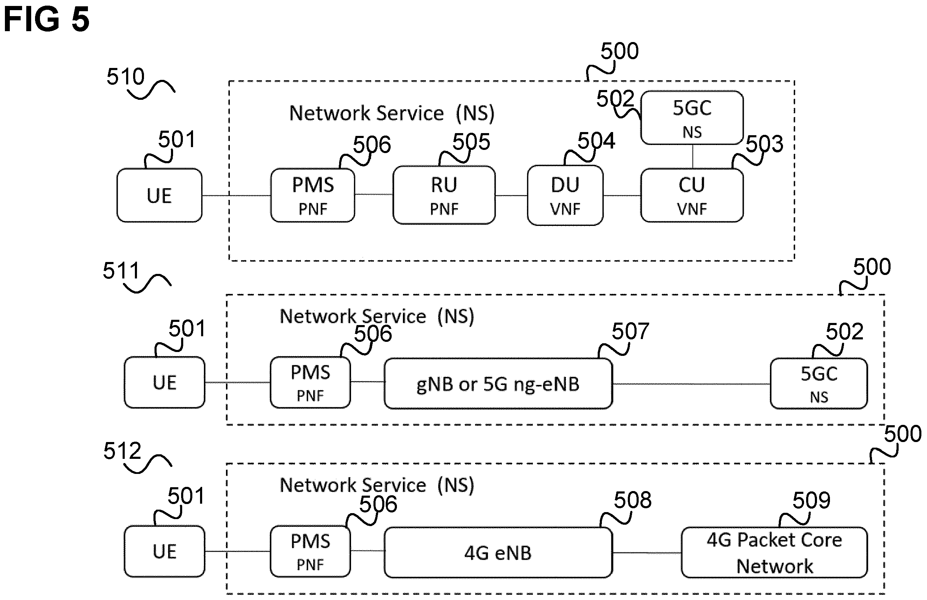

Figure 5 illustrates communication system components for providing a network service 500 to a mobile terminal (UE) 501.

In a first example 510, the network service 500 is provided by a core network NS 502, a centralized unit VNF (or PNF) 503, a distributed unit VNF (or PNF) 504, a radio unit PNF 505 and, in particular, a PMS PNF 506.

In a second implementation example 511 CU, DU, RU NFs can be provided by a single 5G base station (i.e. gNB or ng-eNB) 507. Similarly, in a third example 512, the NS ca be composed on 4G related NFs (e.g., eNB and SGW, PGW) 508 and 509, or even hybrid 4G and 5G NFs.

According to various embodiment, the PMS PNF can be applied in any NS type (nested or not). A PMS manager 401, 402 handles both the PMS as a resource and the PNF running on top (management and control aspects).

The network service 500 is described by a network service descriptor (NSD) which includes information about VNFDs, PNFDs, NestedNSs, Service Access Points, autoScalingRules, deployment flavours, forwarding graphs, virtual links (VL), life cycle management scripts, etc.

In the following, examples of objectives from OSS/BSS or operator perspective are given.

As a first example, it is assumed that the OSSBSS 301 provides the NSD and PMS-aware policies to the orchestrator 302 without providing details on the actual resource allocation. For example OSSBSS 303 requests: "deploy DU VNFs on machines with 4 vCPUs and 12GB vMem, in area A which supports PMS absorption". The OSSBSS 302 does not know how absorption will be really applied and how it will be really operated by the PMS manager 303. The orchestrator 302 is aware of the PMS specifics but translates this information in an abstract way to OSSBSS 303. It should be noted that the orchestrator 302 is also not configuring the PMS PNF, the orchestrator 302 only requests its management (it knows its capabilities, functionality, its state etc.).

As a second example, it is assumed that the OSSBSS 303 wants an NS to be deployed in a location A for which it knows that there is presence of PMS, and the OSS/BSS 303 wants that the radio signals extended by the PMS functionality cover certain sub-area of location A. This triggers the orchestrator 302 to provide actions like appropriate resource placement of the NFs (VNFs and PNFs) that constitute the NS, and optimize the relevant resource allocation and trigger to the PMS manager the configuration of the PMS to cover the appropriate sub-area.

As a third example, it is assumed that during NS lifetime, OSS/BSS 303 receives notifications from the orchestrator 302 about changes on the PMS infrastructure (e.g. a wall was removed, or a PMS PNF adds new capabilities) and updates the related PMS policies.

PMS information may be part of information taken into account by the orchestrator further including NS information, VNF policies, constraints, deployment flavours, etc. As illustrated in figure 5, PMS PNF 506 may be part of an NS 500. Alternatively, it is not part of an onboarded NSD and during runtime (after initial NS deployment) PMS PNFs and PMS resources are handled by the orchestrator 302 and start to be used during the runtime NS handling.

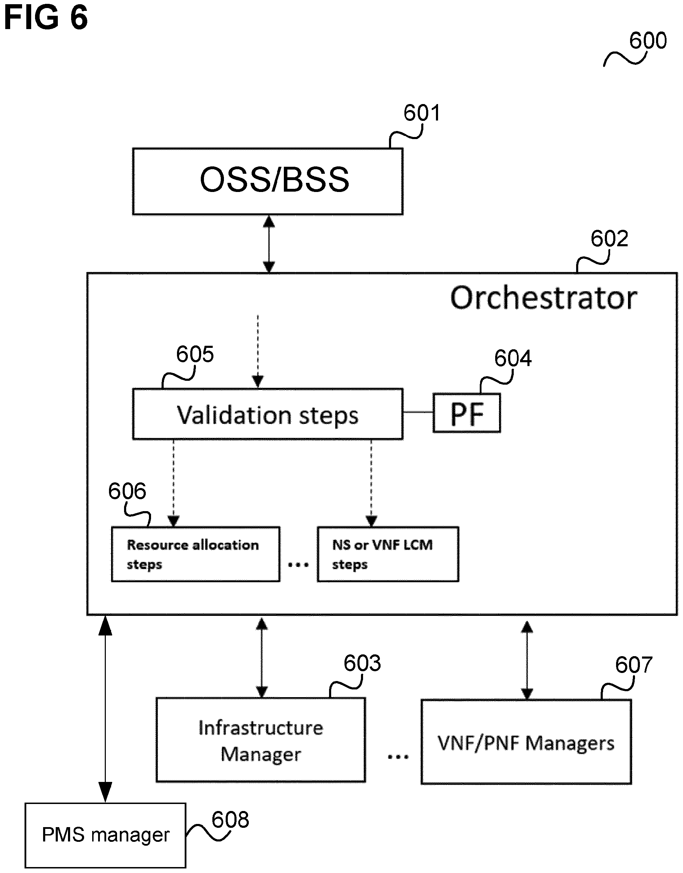

Figure 6 shows a diagram 600 illustrating PMS-based Validation Function according to an embodiment.

Corresponding to figure 3, OSSBSS 601, an orchestrator 602 and a PMS manager 608 are involved. Besides PMS manager 608, the orchestrator 602 also interacts with an infrastructure manager 603 responsible for the control and management of infrastructure (such as compute, network and storage resources) and a VNF and PNF manager 607 responsible for the management of the deployed VNFs /PNFs operating on top of virtualized or physical infrastructure, respectively. The orchestrator may for example instantiate (or not) a network service, affecting infrastructure resource allocation (e.g. which physical resource to use to deploy a certain DU VNF etc.).

The addition of PMSs and PMS PNFs affects the validation process regarding NS deployment and LCM (Life Cycle Management) operations. Existence and capabilities of PMS can be part of the NS and VNF/PNF LCM decision making, e.g., when scaling out a VNF. Especially for low latency NS the existence of a PMS (or its lack) may be critical factor on how the orchestrator 602 deploys the network (physical components and virtual components), in particular NFs (VNFs, PNFs) during instantiation but also during subsequent management. For example, existence of specific PMS capabilities can affect the affinity and anti-affinity rules when deploying specific VNFs. Usage of PMS may be part of the deployment flavours (DF) (not only NS DF, but also VNF DF), e.g. deciding whether to use a PMS can be part of the NS and VNF/PNF LCM decision making.

According to various embodiments, a function is provided inside the orchestrator 602 and/or the OSSBSS 601 to support this handling (in particular the determining of a deployment). The orchestrator 602 can manage resources (service resources and infrastructure resources) considering priorities based on operator policies and SLAs (service level agreements). Priorities and policies are updated to be PMS aware. Corresponding signalling between the OSSBSS 601 and the orchestrator 602 and between the orchestrator 602 and the PMS manager 608 may be provided.

According to various embodiments, the OSSBSS 601 acts as a Policy Administration Point (PAP) which defines policies and the orchestrator 602 implements a Policy Function (PF) 604 which evaluates policies and executes the policy conformance decisions. A policy can be defined (PAP) in OSSBSS, inside the orchestrator, etc. The policy function ensures conformity with an PMS-aware policy (irrespective of which entity defined the policy). The infrastructure manager 603 may also implement a PF.

A policy can be applied/activated to lifecycle management and resource orchestration. For example, the PAP (i.e. OSSBSS 601) creates a certain PMS-aware policy (e.g. NS LCM policy, VNF LCM policy, resource management policy or placement policy, etc.) and transfers the policy to the orchestrator. The PF 604 residing in the orchestrator is responsible for policy conformance. There may also be policies for VNF LCM operations.

The orchestrator 602 may execute the validation e.g. when onboarding NS or due to NS or VNF LCM event.

Instantiation of a network service may for example include the following:
1) The Orchestrator 602 communicates with PMS manager 608 about the deployment, status and configuration of available PMSs in the area.
2) The orchestrator 602 receives a request to instantiate a NS (e.g. using an operation Instantiate NS of a specified NS LCM interface).
3) The orchestrator 602 performs a validation 605 for the request. This includes checking both the validity of the request (e.g., that the sender is authorized) and validation of the parameters passed for technical correctness like also policy conformance. For example, the orchestrator may check whether the request violates PMS-aware affinity and anti-affinity rules (if not, continue) and whether the request respects PMS-aware deployment flavour (DF) (such as NS DF or VNF DF; if yes, continue). Input for 605 may be legacy input, PMS parameters and PMS policies. The output of 605 is a validation result.
4) The orchestrator 602 then performs resource allocation 606 (e.g. for scheduling in a certain area). This is based on the validation result of 605 as well as legacy input and PMS attributes and parameters. For the resource allocation, for each VNF instance needed in the NS, the orchestrator 602 checks whether an instance matching the requirements exists already (if exists, it will be used as part of the NS). In case new VNFs need to be instantiated and thus resources from the infrastructure need to be allocated, and in case that reservation of resources is needed according to operational policies, then:
   a. The orchestrator 602 requests from the infrastructure manager 603 availability of network resources needed and reservation of those resources.
   b. The infrastructure manager 603 checks the availability of network resources needed and reserves them (e.g. scheduling physical resources in the area).
   c. The infrastructure manager 603 returns the result of the reservation back to orchestrator 602.
5) The orchestrator 602 requests from the infrastructure manager 603 instantiation of the network connectivity needed for the Network Service using the operations Allocate Resource or Update Resource from the Virtualised Resources Management interface.
6) The infrastructure manager 603 instantiates the connectivity network needed for the Network Service.
7) The infrastructure manager 603 acknowledges completion.
8) Assuming the list of VNF instances to be provisioned is not empty, the orchestrator 602 requests to the VNF manager to instantiate the VNF instances needed for the NS and provides information about the networks where to connect the VNF external interfaces.
9) Once all VNF instances are available and for the VNFs not already connected, the orchestrator 602 requests the infrastructure manager 603 to connect them.
10) The infrastructure manager 603 connects needed network resources to the network needed infrastructure network(s).
11) The infrastructure manager 603 acknowledges completion.
12) If needed, orchestrator 602 requests Network Manager to connect at the application level VNF external interfaces to physical network function interfaces or it provides to other management systems the corresponding information about the external interfaces of the NF involved in the NS, so that these other management systems can perform the actual setup of connectivity at the application level. The Network Manager can be OSSBSS, an NMS (Network Management System), one or more EM (Element Manager).
13) The orchestrator 602 acknowledges the completion of the Network Service instantiation.

The orchestrator 602 thus has the following functionalities (possibly supported by corresponding signals and information models introduced for this purpose):
- Reserve PMSs as resources.
- Perform PMS resource catalogues CRUD operations (create, read, write etc.).
- Onboard PMS related descriptors/information and interpret new PMS models.
- Manage PNF/VNF functions controlled by PMS manager.
- Process extended NSD definitions which also consider PMSs as part of the integrated NS.
- Handle locally the different configuration and management aspects of the PMSs, PMS status monitoring (handle PMS manager related OAM, alarms etc.).
- Orchestrate connectivity between PMS manager and PMS-PNF and the rest of the network.
- Re-expose PMS manager capabilities.
- Apply PMS/PMS manager security control (e.g. authentication).
- Provide advanced orchestration services like policy management for PMS-aware operations.
- Abstract from OSS/BSS multi-technology PMS specifics and compatibility issues (abstracts any compatibility issues from different PMS/PMS manager technologies towards OSSBSS).
- Optimize network resources usage jointly considering PMSs configuration and performance.
- Build a unified view of all physical network resources and PMSs as a distributed set.

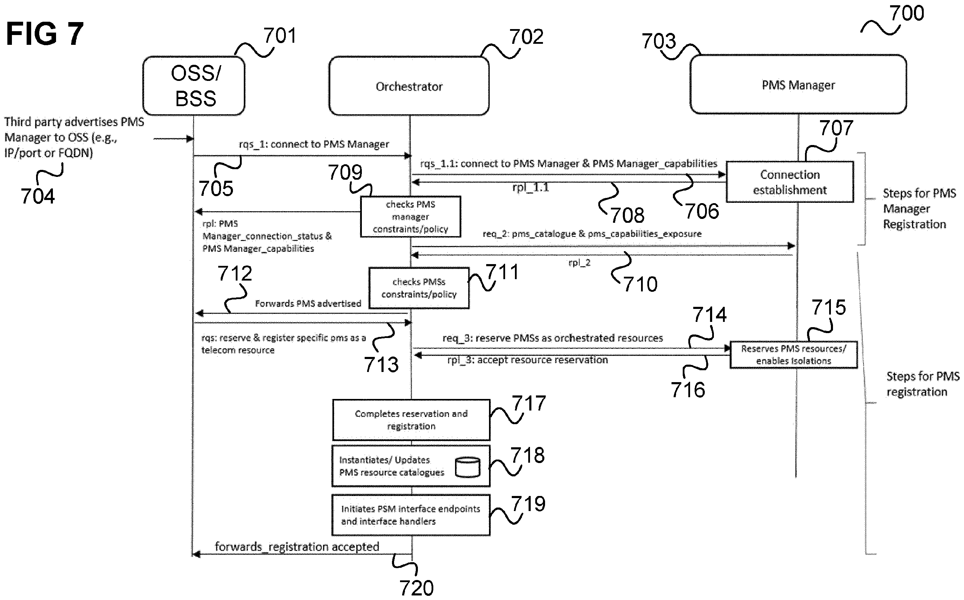

Figure 7 shows a flow diagram 700 for PMS resource reservation with on-demand orchestration driven by the OSSBSS.

The flow takes place between OSS/BSS 701 (corresponding to OSSBSS 301), an orchestrator 702 (corresponding to orchestrator 302) and a PMS manager 703 (corresponding or implemented by manager 303). The PMS manager is able to handle one or more PMSs.

In 704, a third party advertises the PMS manager to the OSSBSS (e.g., by IP/port or FQDN (Fully-Qualified Domain Name)).

In 705, the OSSBSS 701 requests to the orchestrator 702 to connect to the PMS manager 703.

In 706, the orchestrator 702 requests a connection to the PMS manager 703 and being informed about PMS manager capabilities.

In 707, the PMS manager 703 establishes a connection to the orchestrator 702 in response to the request and acknowledges in 708.

In 709, the orchestrator 702 checks with the OSSBSS 701 for PMS manager constraints or policies. The orchestrator also acknowledges the connection status and PMS manager related information to the orchestrator 701.

In 710, the orchestrator 702 requests and receives information about presence and capabilities of PMSs handled by the PMS manager 703.

In 711, the orchestrator 702 checks for PMS constraints or policies.

In 712, the orchestrator 702 informs the OSSBSS 701 about the available PMSs.

In 713, the OSSBSS 701 requests reservation and registration specific PMSs as a communication system resource.

In 714, the orchestrator 702 requests reservation of PMSs as orchestrated resources from the PMS manager 703 which reserves the PMSs in 715 and acknowledges in 716.

In 717, the orchestrator 702 completes reservation and registration.

In 718, the orchestrator 702 initiates and/or updates PMS resource catalogues.

In 719, the orchestrator 702 initiates PMS interface endpoints and interface handlers.

In 720 the orchestrator 702 notifies the OSSBSS 701 that the registration has been accepted. After this step the registered PMSs can be used as resources for Network Services managed by OSSBSS 701 and the Orchestrator 702.

Different resource management models may be used per resource type. According to an embodiment, it is possible for the network operator to select one of the following resource management models, or a combination of them:
Model 1: the PMS manager is operated by an external entity different from the network operator PMS manager
Model 2: the network operator is also the PMS manager owner
Model 3: the network operator interacts with the PMS manager through another management system (for example used to control and optimize the power consumption of the building).
Model 4: Network operator exposes PMS related information through an API to third parties.

In case of model 2 and model 4, PMS resources can be committed, from the network operator to a particular network operator consumer (e.g. MVO) or consumer service.

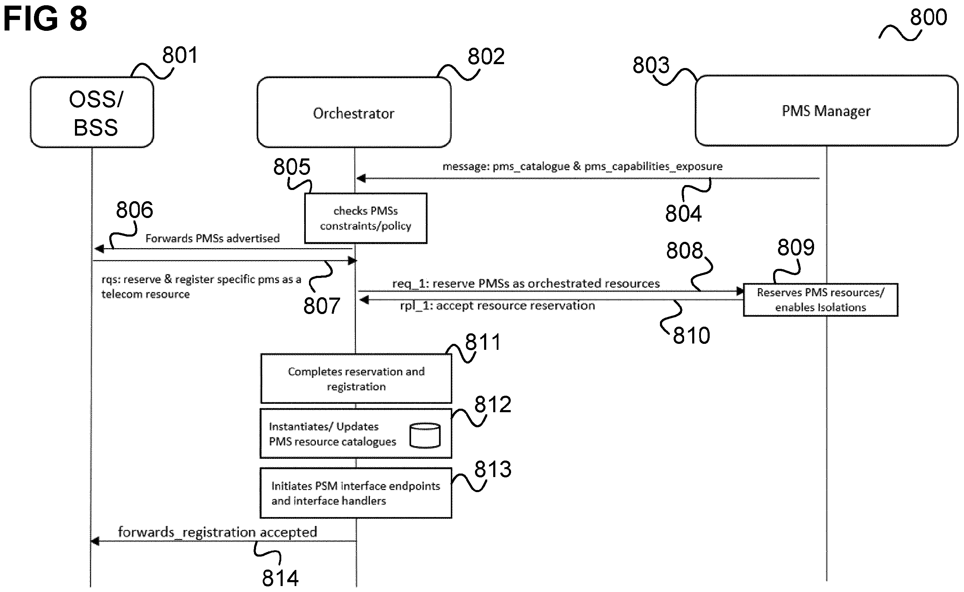

Figure 8 shows a flow diagram 800 for PMS resource reservation with dynamic and/or automatic network driven orchestration.

The flow takes place between OSS/BSS 801 (corresponding to OSSBSS 301), an orchestrator 802 (corresponding to orchestrator 302) and a PMS manager 803 (corresponding or implemented by manager 303). The PMS manager is able to handle one or more PMSs.

The flow assumes that connectivity already exists between the PMS manager 803 and the orchestrator 802.

In 804, the orchestrator 802 receives updated information about presence and capabilities of PMSs handled by the PMS manager 803.

In 805, the orchestrator 802 checks for PMS constraints or policies.

In 806, the orchestrator 802 informs the OSSBSS 801 about the available PMSs.

In 807, the OSSBSS 801 reserves and registers specific PMSs from the advertised set as a communication system resource.

In 808, the orchestrator 802 requests reservation of PMSs as orchestrated resources from the PMS manager 803 which reserves the PMSs in 809 and acknowledges in 810.

In 811, the orchestrator 802 completes reservation and registration.

In 812, the orchestrator 802 initiates and/or updates PMS resource catalogues.

In 813, the orchestrator 802 initiates PMS interface endpoints and interface handlers.

In 814 the orchestrator 802 notifies the OSS/BSS 801 that the registration has been accepted.

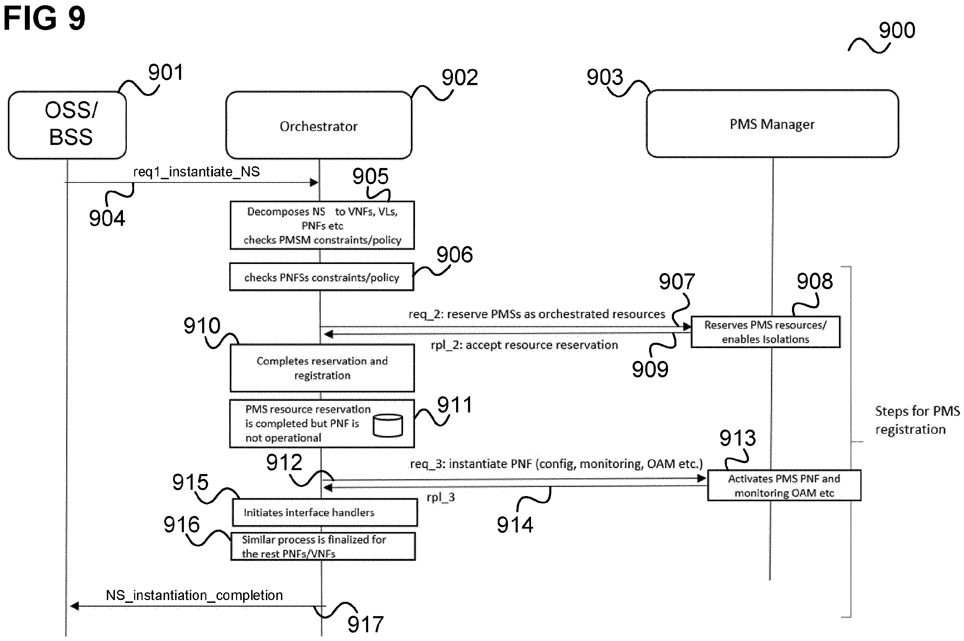

Figure 9 shows a flow diagram 900 for PMS resource reservation with on-demand onboarding and instantiation based on a PMS PNFD (PNF Descriptor) as part of an NSD by OSSBSS.

The flow takes place between OSSBSS 901 (corresponding to OSSBSS 301), an orchestrator 902 (corresponding to orchestrator 302) and a PMS manager 903 (corresponding or implemented by manager 303). The PMS manager is able to handle one or more PMSs.

In 904, the OSS/BSS 901 a request to instantiate an NS to the orchestrator 902.

In 905, the orchestrator 902 decomposes the NS into VNFs, VLs (Virtual Links) PNFs etc..

In 906, the orchestrator 902 checks for PMS constraints or policies.

In 907, the orchestrator 902 requests reservation of PMSs as orchestrated resources from the PMS manager 903 which reserves the PMSs in 908 and acknowledges in 909.

In 910, the orchestrator 902 completes reservation and registration.

In 911, resource reservation is completed but the PNF is not operational.

In 912, the orchestrator 902 requests the PMS manager 903 to initiate the PNF. The PMS manager 903 activates an PMS PNF accordingly in 913 and acknowledges in 914.

In 915, the orchestrator 902 initiates interface handlers.

In 916, the orchestrator completes a similar process for remaining PNFs and VNFs.

In 917 the orchestrator 902 notifies the OSS/BSS 901 that NS instantiation has been completed.

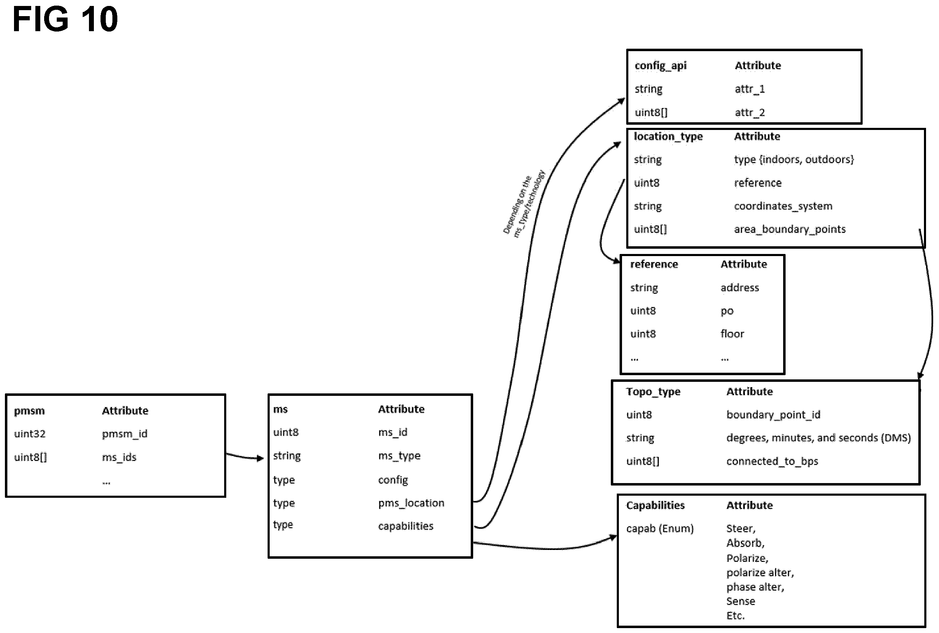

Figure 10 gives an example for the modelling of PMS information, in particular the information flow via a capabilities exposure interface on the or-manager reference point.

The orchestrator to PMS manager communication can be realized in the basis of a reference point (or-pmsm) hosting one or more relevant interfaces related to (non-exclusive list):
- if_1: pms_capabilities_exposure
- if_2: pms_configuration_channel
- if_3: pms_notifications_management
- if_4: pms_monitoring
- .....

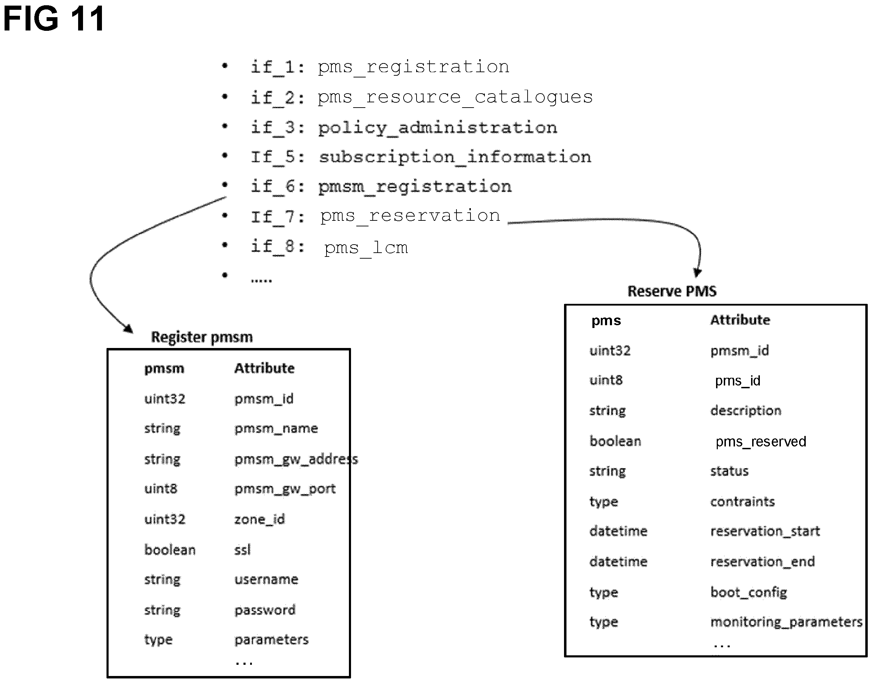

Figure 11 gives an example for the modelling of orchestrator functionality, in particular the information flow via the or-oss reference point.

The orchestrator to OSSBSS communication is updated to consider also configuration and management of PMSs.

Policy constraints can be provided to the orchestrator or can be set at runtime. The constraints specify conditions for the PMS manager operation and maintenance workflow that need to be fulfilled.

The orchestrator offers an abstract NS level interface. This is the view the operator gets. It ensures that the orchestrator is performing the necessary translation functionality.

In the case the orchestrator can communicate with PMS manager indirectly through another PMS management entity, then the functionalities of the previous section and the information flows are adapted accordingly.

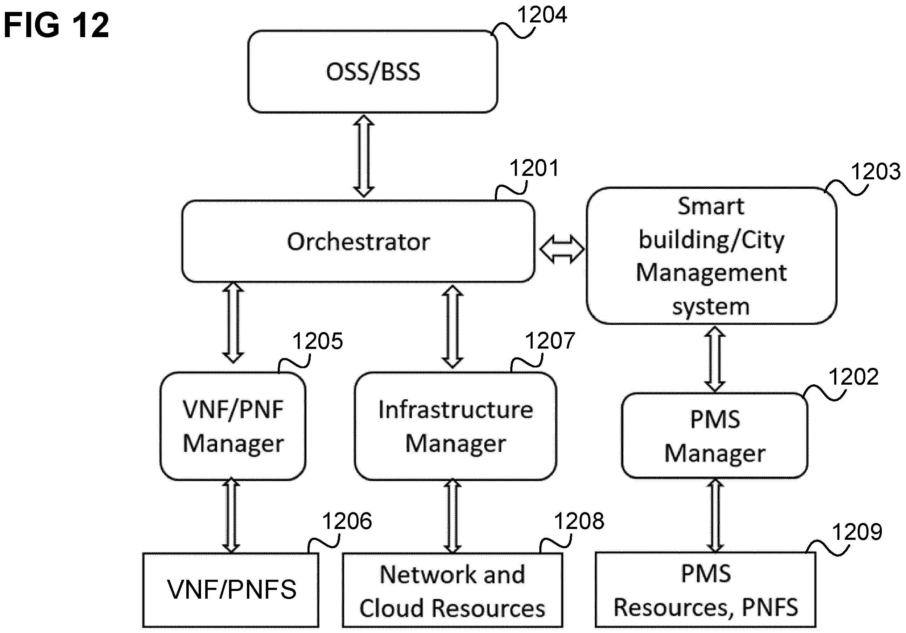

Figure 12 shows an architecture where an orchestrator 1201 communicates with a PMS manager 1202 via a smart building (or city) management system 1203.

The orchestrator 1201 is connected to OSSBSS 1204, a VNF/PNF manager 1205 which handles VNFs and PNFs 1206 and an infrastructure manager 1207 which handles network and cloud resources 1208. The PMS manager 1202 handles PMS resources and PNFs 1209.

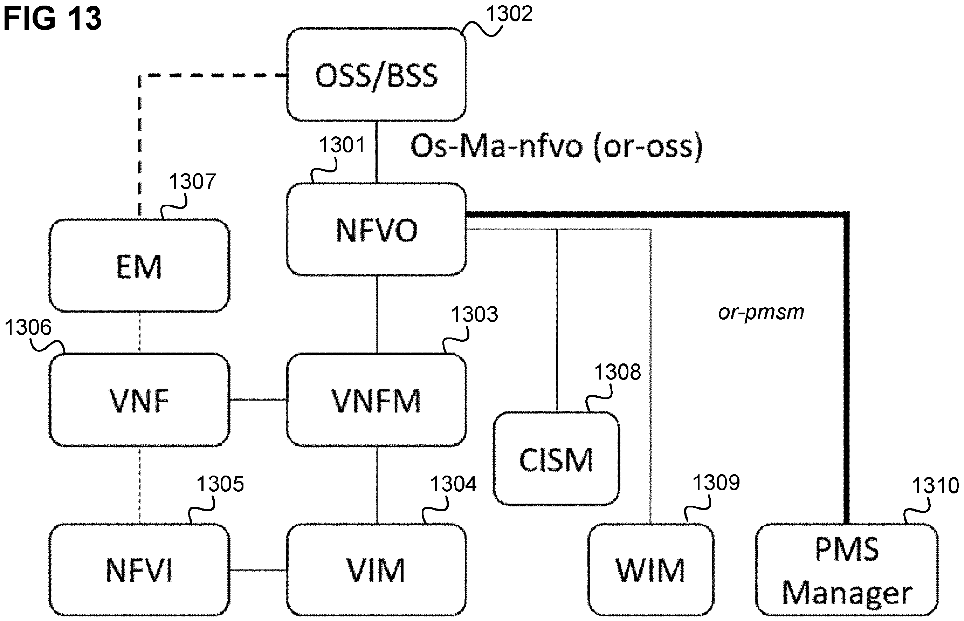

Figure 13 shows an architecture for ETSI NFV's NFV-MANO aware orchestration including PMSs.

An NFVO 1301 is connected to OSSBSS 1302 and an VNFM (VNF manager) 1303. The VNFM 1303 is connected to a VIM (Virtual Infrastructure Manager) 1304, an NFVI (Network Functions Virtualization Infrastructure) 1305, an VNF 1306, and EM 1307.

The NFVO 1301 is further connected to an CISM (Container Infrastructure Service Management) 1308 and a WIM (WAN Infrastructure Manager) 1309, and, via an or-manager reference point to a PMS manager 1310.

The NFVO 1301 maintains an NS catalogue, a VNF catalogue and handles VNF instances, NFVI resources, PMS resources, and PMS PNFs (non-exhaustive list).

The NFV architectural framework can support the integration of PMS infrastructure management deployed as part of the NFV-MANO framework, or external to the NFV-MANO framework (e.g. under control of other OSSBSS systems).

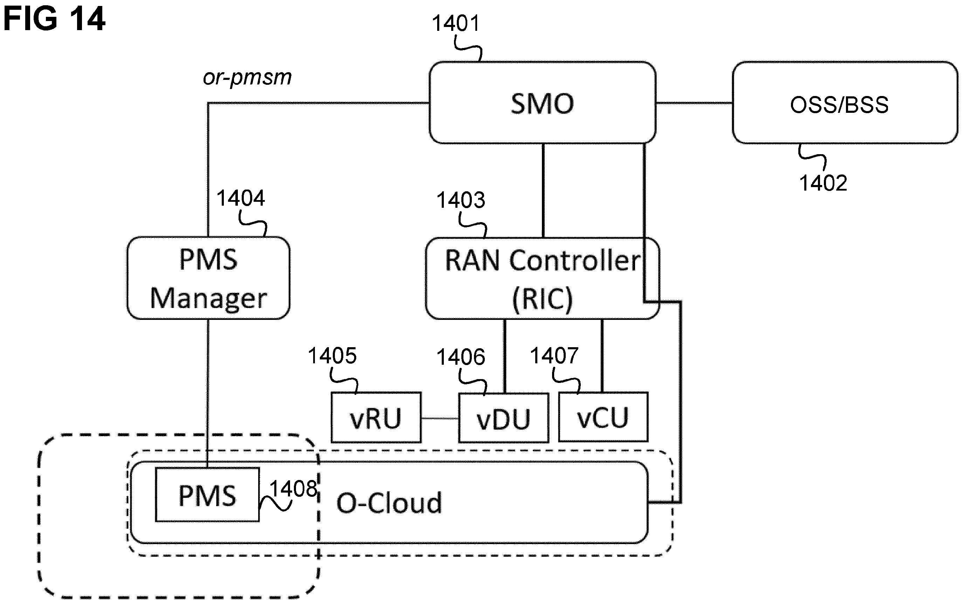

Figure 14 shows an architecture for O-RAN (Open Radio Access Network) based orchestration including PMSs.

A SMO (Service Management and Orchestration) 1401 is connected to OSSBSS 1402, to a RAN controller 1403 and to a PMS manager 1404. The RAN controller 1403 is connected to vDUs 1406 and to vCUs 1407. vRUs 1405 are connected to vDUs. The PMS manager 1404 handles a PMS which may be an O-cloud resource.

The RAN Controller 1403 is also able to optimize the configuration for the RAN by closed-loop control through interaction with PMS manager1404 via the SMO. The orchestrator (SMO) is responsible for the overall optimizization, management and network operations.

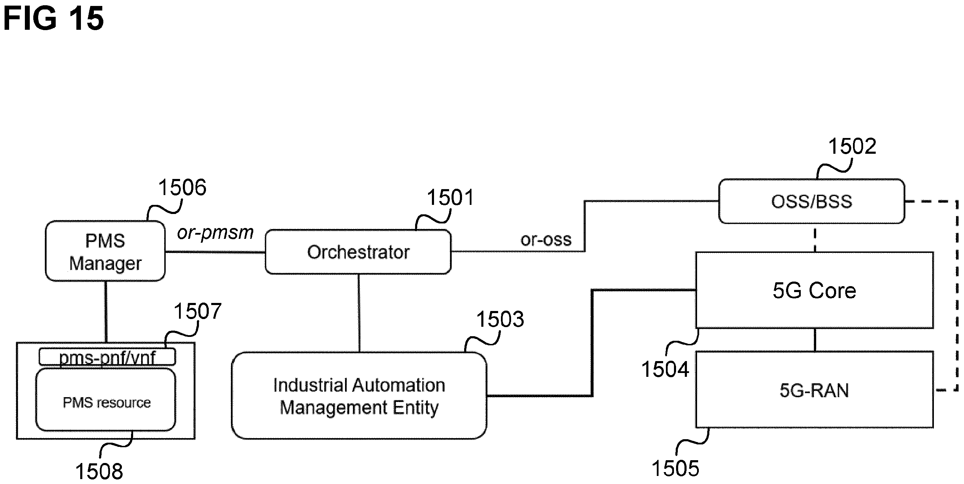

Figure 15 shows an architecture for an industrial network including PMSs.

An orchestrator 1501 is connected to OSSBSS 1502 and an industrial automation and management entity 1503 which is connected to a 5G core 1504 and a 5G RAN 1505.

The orchestrator 1501 is connected to a PMS manager 1506 which handles PMS PNFs and VNFs 1507 with associated PMS resources 1508.

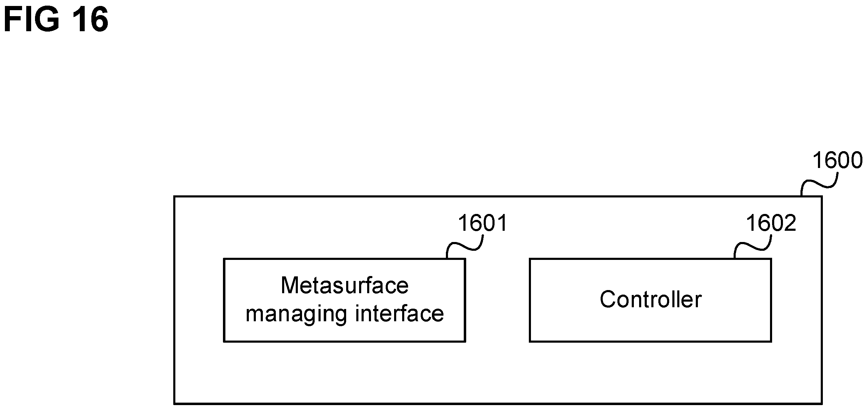

In summary, according to various embodiments, a deployment controlling component of a communication system is provided as illustrated in figure 16.

Figure 16 shows a deployment controlling component 1600 of a communication system.

The deployment controlling component 1600 includes a metasurface managing interface 1601 configured to receive information about presence, status and capabilities of programmable metasurfaces usable by the communication system.

The deployment controlling component 1600 further includes a controller 1602 configured to determine a deployment of network functions of the communication system and perform resource allocation depending on the received information and to control communication system resources of the communication system according to the determined deployment.

According to various embodiments, in other words, a deployment controlling entity of a communication system takes into account the presence and capabilities (e.g. polarizing, steering, absorption, , frequency bands supported, etc.) of programmable metasurfaces. In the example of figure 2, for example, the controlling entity may decide to deploy a NF only at the first sub-area 204 to cover the whole space rather than, for example, place multiple instances of the same NF to sub-areas 205 and 206.

The deployment controlling component is for example an orchestrator but may also include the functions of both the orchestrator and OSSBSS. Accordingly, the functionalities described above for an orchestrator and an OSSBSS, respectively, may apply to the deployment controlling entity. In particular, the deployment controlling entity may also set a policy which the controller then takes into account for the deployment. The deployment controlling component is not necessarily implemented by a single device but may also be implemented by multiple devices (e.g. using one or several management functions deployed on Cloud resources).

The information may come from a manager as described above and the deployment controlling entity may take into account policies and requests, e.g. from OSSBSS (generally one or more components issuing requests and policies).

The parts of the deployment controlling component (e.g. the interface and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

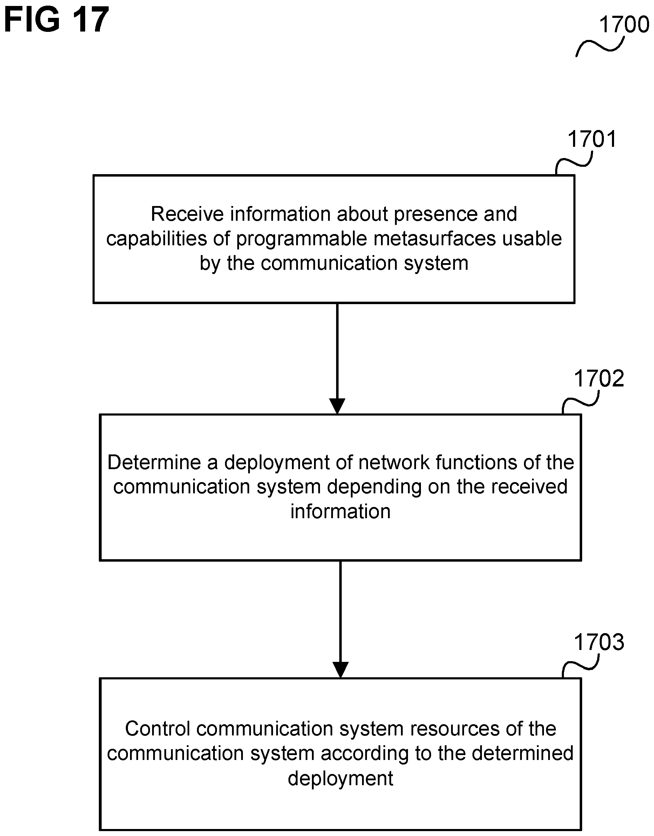

The deployment controlling component for example carries out a method as illustrated in figure 17.

Figure 17 shows a flow diagram 1700 illustrating a method for controlling deployment of a communication system.

In 1701, information about presence and capabilities of programmable metasurfaces usable by the communication system is received.

In 1702, a deployment of network functions and resource allocation of the communication system depending on the received information is determined.

In 1703, communication system resources of the communication system are controlled according to the determined deployment.

According to an embodiment, a communication device is provided including a receiver configured to receive PMS information from a PMS management system, regarding PMSs and PMS PNFs where the signalling includes PMS capabilities exposure, PMS status, PMS-PNF notifications and alarms, and a controller configured to validate and optimize deployment and operation of telecommunication Network Services (NSs) based on PMS/PMS-PNF information.

According to another embodiment, a method for validating and optimizing deployment and operation of telecommunication Network Services (NSs) is provided, the method including receiving a request for deploying or updating an NS or a VNF from OSSBSS or generated due to a LCM operation, receiving (from manager) and exposing and translating (to OSSBSS) information about capabilities of programmable metasurfaces and programmable metasurface status, validating a received input and conform against PMS-aware policies, determining function placement and resource allocation according to validation results, PMS parameters and PMS-aware policies, interact with the infrastructure managers to allocate the right resources and perform function placement.

According to various embodiments, a verification method to validate NS requirements, based on PMS information is provided which includes
- Processing information about PMSs.
- Processing NSD validation rules (e.g., deployment flavours, affinity, anti-affinity rules and NS policies).
- Processing NSD with PMS PNFs.
- Perform NSD validation (e.g. when onboarding an NSD or during LCM operation).
- Exposing validation results information to OSSBSS.
- Receiving NSD information considering PMS descriptors from OSS/BSS.

Further, according to various embodiments, a resource allocation method to decide physical and virtual resource allocation and VNF/PNF deployment based on PMS information is provided which includes processing information about PMSs.

Further, according to various embodiments, a method which enables communication between an orchestrator and a PMS manager and an orchestrator and OSSBSS to reserve/onboard PMSs inside a network orchestrator and to register the management system of the PMSs. The method includes:
- Storing and processing information about connection points of PMS and PMS management and control systems
   - Exposing such information to other management systems inside the orchestrator.
- Onboarding PMS resources to the telecom orchestration system.
- Storing and processing information about PMSs.
- Reserving/registering PMS resources in the network orchestration system.
- Enabling notification management and monitoring of a PMS.
- Exposing PMS notifications and alarms to OSSBSS.

The approaches described above
- Provide mechanisms for turning metasurfaces as a programmable telecom infrastructure resource.
- Provide advanced orchestration mechanisms and interactions with OSSBSS (in general an entity providing policies and/or requests for network services) in order to jointly optimize telecom network operations considering metasurfaces.
- Are non-restrictive to one orchestration framework like ETSI NFV's NFV-MANO but can be applied to other designs like in O-RAN based solutions.
- Enable flexibility on the way metasurfaces usage can be further optimized taking into account mobile network operations.
- Allow uniform administration and orchestration from a single logical entity of all types of programmable resources.
- Can be applied to multi-technology PMS environments.
- Can cover both the indoor and outdoor PMS deployment scenarios.

Accordingly, the approaches described above allow enhancing the network operator orchestration mechanism with methods, mechanisms and interfaces which can handle metasurfaces as a telecom infrastructure resource. Building walls can be used as a infrastructure resource and can be managed uniformly by the network operator. This type of programmable infrastructure can be exploited to realize network services and be part of an integrated orchestration plane connected to OSSBSS. In particular, additional Network Services can be designed using PMS-PNFs. The approaches described above can be used in indoor and outdoor environments and can be used to implement, industrial networks, mobile users, home networks, etc.

## Claims

1. A deployment controlling component (1600) of a communication system comprising:
a metasurface managing interface (1601) configured to receive information about presence and capabilities of programmable metasurfaces (305, 404, 1508) usable by the communication system;
an interface configured to receive a request for providing a network service; and
a controller (1602) configured to ensure that the request conforms to a deployment policy including a network service lifecycle management policy and/or a virtual network function lifecycle management policy and determine a deployment of network functions of the communication system depending on the received information to conform with the deployment policy if the request conforms to the deployment policy and to control communication system resources of the communication system according to the determined deployment to provide the network service.

2. The deployment controlling component (1600) of claim 1, comprising a policy interface configured to receive the deployment policy.

3. The deployment controlling component (1600) of claim 1, wherein the controller (1602) is configured to determine whether for providing the network service an additional network function is needed, determine a placement of an additional network function if it is needed and control the communication system resources of the communication system to provide the additional network function and the determined placement.

4. The deployment controlling component (1600) of claim 3, wherein the controller (1602) is configured to determine whether the additional network function is needed based on the received information.

5. The deployment controlling component (1600) of claim 3 or 4, wherein the controller (1602) is configured to determine the placement of the additional network function based on the received information.

6. The deployment controlling component (1600) of any one of claims 1 to 5, wherein the communication system is a mobile radio communication system and the communication system resources includes at least devices for radio communication.

7. The deployment controlling component (1600) of any one of claims 1 to 6, wherein the communication system resources include the programmable metasurfaces (305, 404, 1508).

8. The deployment controlling component (1600) of any one of claims 1 to 7, wherein the network functions are network functions to implement a virtualized 5G core network and a virtualized 5G radio access network.

9. A method for controlling deployment of a communication system comprising:
receiving information about presence and capabilities of programmable metasurfaces (305, 404, 1508) usable by the communication system;
receiving a request for providing a network service;
ensuring that the request conforms to a deployment policy including a network service lifecycle management policy and/or a virtual network function lifecycle management policy and determining a deployment of network functions of the communication system depending on the received information to conform with the deployment policy if the request conforms to the deployment policy; and
controlling communication system resources of the communication system according to the determined deployment to provide the network service.

## Patentansprüche

1. Eine Bereitstellungssteuerungskomponente (1600) eines Kommunikationssystems, umfassend:
eine Metaoberflächensteuerungsschnittstelle (1601), die eingerichtet ist, Information über Präsenz und Fähigkeiten von programmierbaren Metaoberflächen (305, 404, 1508), die mittels des Kommunikationssystems verwendbar sind, zu empfangen;
eine Schnittstelle, die eingerichtet ist, eine Anfrage zur Bereitstellung eines Netzwerkdienstes zu empfangen; und
eine Steuerung (1602), die eingerichtet ist, sicherzustellen, dass die Anfrage einer Bereitstellungsrichtlinie einschließlich einer Netzwerkdienstnutzungszeitmanagementrichtlinie und/oder einer Virtuelles-Netzwerkfunktionsnutzungszeitmanagementrichtlinie entspricht, und eine Bereitstellung von Netzwerkfunktionen des Kommunikationssystems abhängig von der empfangenen Information zu ermitteln, um der Bereitstellungsrichtlinie zu entsprechen, wenn die Anfrage der Bereitstellungsrichtlinie entspricht, und Kommunikationssystemressourcen des Kommunikationssystems gemäß der ermittelten Bereitstellung zu steuern, um den Netzwerkdienst bereitzustellen.

2. Die Bereitstellungssteuerungskomponente (1600) gemäß Anspruch 1, umfassend eine Richtlinienschnittstelle, die eingerichtet ist, die Bereitstellungsrichtlinie zu empfangen.

3. Die Bereitstellungssteuerungskomponente (1600) gemäß Anspruch 1, wobei die Steuerung (1602) eingerichtet ist, zu ermitteln, ob zur Bereitstellung des Netzwerkdienstes eine zusätzliche Funktion benötigt wird, eine Platzierung einer zusätzlichen Netzwerkfunktion, wenn sie benötigt wird, zu ermitteln und die Kommunikationssystemressourcen des Kommunikationssystems zu steuern, um die zusätzliche Netzwerkfunktion und die ermittelte Platzierung bereitzustellen.

4. Die Bereitstellungssteuerungskomponente (1600) gemäß Anspruch 3, wobei die Steuerung (1602) eingerichtet ist, basierend auf der empfangenen Information zu ermitteln, ob die zusätzliche Netzwerkfunktion benötigt wird.

5. Die Bereitstellungssteuerungskomponente (1600) gemäß einem der Ansprüche 3 oder 4, wobei die Steuerung (1602) eingerichtet ist, die Platzierung der zusätzlichen Netzwerkfunktion basierend auf der empfangenen Information zu ermitteln.

6. Die Bereitstellungssteuerungskomponente (1600) gemäß einem der Ansprüche 1 bis 5, wobei das Kommunikationssystem ein mobiles Funkkommunikationssystem ist und die Kommunikationssystemressourcen mindestens Vorrichtungen zur Funkkommunikation enthalten.

7. Die Bereitstellungssteuerungskomponente (1600) gemäß einem der Ansprüche 1 bis 6, wobei die Kommunikationssystemressourcen die programmierbare Metaoberfläche (305, 404, 1508) enthalten.

8. Die Bereitstellungssteuerungskomponente (1600) gemäß einem der Ansprüche 1 bis 7, wobei die Netzwerkfunktionen Netzwerkfunktionen sind, um ein virtualisiertes 5G-Kernnetzwerk und ein virtualisiertes 5G-Funkzugangsnetzwerk zu implementieren.

9. Ein Verfahren zur Steuerung der Bereitstellung eines Kommunikationssystems, umfassend:
Empfangen von Information über Präsenz und Fähigkeiten von programmierbaren Metaoberflächen (305, 404, 1508), die mittels des Kommunikationssystems verwendbar sind;
Empfangen einer Anfrage zur Bereitstellung eines Netzwerkdienstes; und
Sicherstellen, dass die Anfrage einer Bereitstellungsrichtlinie einschließlich einer Netzwerkdienstnutzungszeitmanagementrichtlinie und/oder einer Virtuelles-Netzwerkfunktionsnutzungszeitmanagementrichtlinie entspricht, und Ermitteln einer Bereitstellung von Netzwerkfunktionen des Kommunikationssystems abhängig von der empfangenen Information, um der Bereitstellungsrichtlinie zu entsprechen, wenn die Anfrage der Bereitstellungsrichtlinie entspricht; und
Steuern von Kommunikationssystemressourcen des Kommunikationssystems gemäß der ermittelten Bereitstellung, um den Netzwerkdienst bereitzustellen.

## Revendications

1. Composant de commande de déploiement (1600) d'un système de communication comprenant :
une interface de gestion de métasurface (1601) configurée pour recevoir une information sur une présence et des capacités de métasurfaces programmables (305, 404, 1508) utilisables par le système de communication ;
une interface configurée pour recevoir une demande de fourniture d'un service de réseau ; et
un contrôleur (1602) configuré pour assurer que la demande est conforme à une politique de déploiement comprenant une politique de gestion de cycle de vie de service de réseau et/ou une politique de gestion de cycle de vie de fonction de réseau virtuel et pour déterminer un déploiement de fonctions de réseau du système de communication en fonction de l'information reçue afin de se conformer à la politique de déploiement si la demande est conforme à la politique de déploiement et pour contrôler des ressources de système de communication en fonction du déploiement déterminé afin de fournir le service de réseau.

2. Composant de commande de déploiement (1600) selon la revendication 1, comprenant une interface de politique configurée pour recevoir la politique de déploiement.

3. Composant de commande de déploiement (1600) selon la revendication 1, dans lequel le contrôleur (1602) est configuré pour déterminer si, pour fournir le service de réseau, une fonction de réseau supplémentaire est nécessaire, déterminer un placement d'une fonction de réseau supplémentaire si elle est nécessaire et commander les ressources de système de communication du système de communication pour fournir la fonction de réseau supplémentaire et le placement déterminé.

4. Composant de commande de déploiement (1600) selon la revendication 3, dans lequel le contrôleur (1602) est configuré pour déterminer si la fonction de réseau supplémentaire est nécessaire sur la base de l'information reçue.

5. Composant de commande de déploiement (1600) selon la revendication 3 ou 4, dans lequel le contrôleur (1602) est configuré pour déterminer le placement de la fonction de réseau supplémentaire sur la base de l'information reçue.

6. Composant de commande de déploiement (1600) selon l'une quelconque des revendications 1 à 5, dans lequel le système de communication est un système de communication radio mobile et les ressources de système de communication comprennent au moins des dispositifs de communication radio.

7. Composant de commande de déploiement (1600) selon l'une quelconque des revendications 1 à 6,
dans lequel les ressources de système de communication comprennent les métasurfaces programmables (305, 404, 1508).

8. Composant de commande de déploiement (1600) selon l'une quelconque des revendications 1 à 7, dans lequel les fonctions de réseau sont des fonctions de réseau pour mettre en oeuvre un réseau central 5G virtualisé et un réseau d'accès radio 5G virtualisé.

9. Procédé de commande de déploiement d'un système de communication, comprenant :
recevoir une information sur une présence et des capacités de métasurfaces programmables (305, 404, 1508) utilisables par le système de communication ;
recevoir une demande de fourniture d'un service de réseau ;
assurer que la demande est conforme à une politique de déploiement comprenant une politique de gestion de cycle de vie de service de réseau et/ou une politique de gestion de cycle de vie de fonction de réseau virtuel et déterminer un déploiement de fonctions de réseau du système de communication en fonction de l'information reçue pour se conformer à la politique de déploiement si la demande est conforme à la politique de déploiement ; et
contrôler des ressources de système de communication du système de communication en fonction du déploiement déterminé pour fournir le service de réseau.
